# EUROPÄISCHE PATENTSCHRIFT

(11) **EP 1 038 654 B1**
(45) Veröffentlichungstag und Bekanntmachung des Hinweises auf die Patenterteilung: **08.08.2001**
(21) Anmeldenummer: 00105131.7
(22) Anmeldetag: 10.03.2000
(51) Int. Cl.: B29C 65/06

(54) **Grossflächige hochzugfeste Geogitter und deren Verwendung als Drain-und Bewehrungsgitter sowie als Zäune**
Large surface high tensile geo-grid and its use as draining and reinforcing mesh grid as well as fence
Grille à large surface pour application géotechnique à haute résistance et son utilisation comme grille de drainage et d'armature ou comme grillage

(30) Priorität: 25.03.1999 DE 19913479
(43) Veröffentlichungstag der Anmeldung: 27.09.2000
(73) Patentinhaber: NAUE-FASERTECHNIK GMBH & CO. KG, D-32312 Lübbecke (DE)
(72) Erfinder: Heerten, Georg, Dr.-Ing., 32312 Lübbecke (DE); Müller, Volkhard, 32469 Petershagen (DE); Priewich, Stephan, 32312 Lübbecke (DE); Uehlemann, Werner, 32339 Espelkamp (DE)
(74) Vertreter: Steffens, Joachim, Dr.

(56) Entgegenhaltungen:
- GB-A- 2 314 802
- US-A- 3 586 572

## Beschreibung

Die vorliegende Erfindung betrifft großflächige hochzugfeste Geogitter, Verfahren und Vorrichtung zu deren Herstellung und deren Verwendung als Drain- und Bewehrungsgitter.

Derartige Geogitter werden beispielsweise zur Befestigung von Straßen- und Gleiskonstruktionen, zur Bodenbefestigung, zur Stabilisierung von Böschungen und zur Sicherung von Deponie-Dichtungssystemen eingesetzt.

Bereits seit den späten 70iger Jahren finden die sogenannten Tensar® -Geogitter der Firma Netlon weltweit in verschiedensten Einsatzbereichen Verwendung.

Bei der Herstellung derartiger Geogitter werden extrudierte Polyethylen- oder Polypropylenbahnen in regelmäßigen Abständen gelocht. Unter Erwärmung werden die Bahnen entweder gemäß der britischen Patentschrift 2 073 090 in Längsrichtung (einachsial) oder gemäß der britischen Patentschrift 2 035 191 in Längs- und Querrichtung (zweiachsial) gestreckt. Durch das Strecken werden in Streckrichtung die Polymermoleküle von einer willkürlich angeordneten Lage in eine geordnete und ausgerichtete Lage gebracht. Dieses Verfahren erhöht die Zugfestigkeit und die Steifigkeit der Geogitter. Eine Weiterbildung dieser Geogitter ist in der US-PS 4 618 385 (Mercer) beschrieben. Problematisch bei diesen Geogittern wirkt sich jedoch die Tatsache aus, daß die Gitterpunkte nicht gleichermaßen verstreckt werden können, wie die zwischen den Gitterpunkten verlaufenden Stege, so daß bei derartig verstreckten Gittern die auf das Quadratmetergewicht bezogene Festigkeit in gewisser Beziehung nicht ganz befriedigend ist.

Um das Verhältnis Festigkeit zu Quadratmetergewicht zu verbessern, ist in der DE-PS 41 37 310 (Akzo) ein Verfahren zur Herstellung von Geogittern beschrieben, bei dem zunächst Streifen mit zwei Schichten von unterschiedliche Schmelzbereiche aufweisenden Polymeren hergestellt und danach verstreckt werden (molekülorientierte Bikomponenten-Streifen). Anschließend werden die Streifen in Reihen derart über Kreuz gelegt, daß die Seite der Streifen mit dem niedrigeren Schmelzbereich gegeneinander zu liegen kommen. Das so gebildete Gelege wird dann mit einer Temperatur beaufschlagt, die über den Schmelzbereich des Polymeren mit niedrigerem Schmelzbereich hinausgeht, aber unter dem Schmelzbereich des Polymeren mit höherem Schmelzbereich liegt. Hierdurch werden die Kreuzungsstellen der Streifen benachbarter Reihen über das Polymer mit niedrigem Schmelzbereich miteinander verbunden.

Von einem ähnlichen Verfahren wird gemäß der britischen Patentanmeldung 2 314 802 (Mercer) ausgegangen. Dort ist in der Beschreibungseinleitung hinsichtlich des Standes der Technik angegeben, daß von der Firma Signode Geogitter aus molekülorientierten Polyesterbändern hergestellt werden, die auf einer Seite mit einem niedriger schmelzenden Kunststoff überzogen sind (Bikomponentenbänder). Diese Bikomponenten-Polyesterbänder werden dann kreuzweise so übereinander gelegt, daß die niedrig schmelzenden Seiten in den Kreuzungsbereichen aufeinander zu liegen kommen. Anschließend werden die Kreuzungsbereiche verschweißt.

Als nachteilig bei diesen Geogittern hat sich die Tatsache erwiesen, daß die Verbindungsfestigkeit in den Kreuzungsbereichen, die durch die niedriger schmelzende Polymerkomonente vorgegeben ist, nicht befriedigend ist.

Um diesen Nachteil zu beseitigen wurde gemäß der vorstehend genannten britischen Patentanmeldung 2 314 802 (angemeldet am 2. Juli 1996 und veröffentlicht am 14. Januar 1998) ein Verfahren entwickelt, bei dem man zwar auch mit molekülorientierten Bikomponenten-Streifen arbeitet, allerdings mit der Abänderung, daß man in Maschinenrichtung pro Gittersteg einen Unter-Bikomponenten-Streifen und einen Ober-Bikomponenten-Streifen führt und zwar so, daß die beiden Streifen mit ihren niedriger schmelzenden Seiten nach Einführung der Querstreifen ganzflächig übereinander liegen. Anschließend werden dann jeweils die Unter-Bikomponenten-Streifen unter Einschluß der Querstreifen mit den Ober-Bikomponenten-Streifen ganzflächig mittels Flammenschweißen oder Heißluftschweißen miteinander verbunden.

Mit diesem Verfahren wird zwar die Verbindungsfestigkeit im Kreuzungsbereich erhöht, nachteilig ist aber, daß man, von der Materialseite aus betrachtet, zwei verschiedene Polymere benötigt, um die Bikomponenten-Streifen herzustellen, und jeweils zwei Bikomponenten-Streifen für die Bildung der jeweiligen Stegkomponente benötigt.

Aufgabe der vorliegenden Erfindung ist es daher, ein großflächiges hochzugfestes Geogitter zur Verfügung zu stellen, das aus einschichtigen homogenen molekülorientierten hochzugfesten Stäben, die keine zusätzlichen Beschichtungen aufweisen, durch Verschweißen in der Weise hergestellt wird, daß einerseits eine zufriedenstellende Bindungsfestigkeit in den verschweißten Kreuzungsbereichen der Kunststoffstäbe erreicht wird, ohne daß jedoch die Molekülorientierung, d.h. die Zugfestigkeit der Kunststoffstäbe in den Kreuzungsbereichen wesentlich beeinträchtigt, und andererseits eine wirtschaftliche Produktionsgeschwindigkeit gewährleistet wird.

Gelöst wird diese Aufgabe durch den Einsatz von einschichtigen homogenen molekülorientierten hochzugfesten Kunststoffstäben und durch Anwendung der Vibrations-Schweißtechnik, wobei eine Vielzahl von hinter- und nebeneinander angeordneten Kreuzungsbereichen der sich kreuzenden einschichtigen homogenen molekülorientierten hochzugfesten Kunststoffstäbe gleichzeitig unter gleichen Bedingungen im Taktverfahren unter Druck miteinander verbunden werden.

Die Vibrations-Schweißtechnik beinhaltet ein Reibungs-Schweißverfahren, bei dem die aufeinanderliegenden Kreuzungsbereiche der Kunststoffstäbe nicht durch Wärmezufuhr von außen plastifiziert werden, sondern durch direkte Umwandlung von Reibungsenergie in Wärme. Hierzu werden die Kunststoffstäbe in ihren Kreuzungsbereichen mit solchen Frequenzen und Amplituden in Schwingungen versetzt, daß die Oberflächen erweichen und auf diese Weise unter hohem Druck verschweißen. Das Hauptkennzeichen des Vibrations-Schweißens ist somit die Hin- und Her-Bewegung zur Erzeugung der Reibung, so daß die Schmelzwärme nur an den Staboberflächen wirksam wird und die Molekülorientierung nur an der Oberfläche der Kunststoffstäbe verloren geht. Außerdem hat dieses Verfahren den Vorteil kurzer Aufheiz- und kurzer Abkühlzeiten, da die Erwärmung nur an den Oberflächen stattfindet, wodurch kurze Taktzeiten möglich sind, die die gewünschte wirtschaftliche Produktionsgeschwindigkeit ermöglichen, d.h. es lassen sich die erfindungsgemäßen großflächigen Geogitter in einer Gesamtbreite von z.B. 5 m und einem Abstand der Kunststoffbänder von Bandmitte zu Bandmitte von ca. 3 cm in einer Geschwindigkeit von mindestens 2,5 m pro Minute herstellen.

Ursprünglich hatte man dies nicht für möglich gehalten, da man annahm, daß bei einer zu erwartenden Flächenpressung von ca. 1,5 N/mm² und einer Breite der Kunststoffstäbe von z.B. 12 mm bei einem 3 cm-Raster und ca. 5000 zu verschweißenden Kreuzungsbereichen Kräfte von ca. 1.000.000 N entstehen würden, die in keiner Weise eine steuerbare Verschweißung zulassen würden. Weiterhin wurde angenommen, daß bei Schwingungen von 60 Hz bis 300 Hz und der Vielzahl der gleichzeitig zu verschweißenden Kreuzungsbereiche die Maschinenkomponenten zerstört würden.

Überraschenderweise wurde jedoch gefunden, daß man bei entsprechend schwerer Auslegung der Schweißtische diese Kräfte abfangen kann und es dadurch möglich ist, daß man beispielsweise 500 bis 8000 Kreuzungsbereiche gleichzeitig verschweißen kann.

Wesentlich hierfür war die erfindungsgemäße Entwicklung einer neuen Vibrations-Schweißeinrichtung, ausgerüstet mit einer großflächig ausgelegten Schwingplatte und entsprechenden Unterbauten und entsprechenden Steuerungs- und Drucksystemen sowie von Stabzuführungsanordnungen. Von diesen neuen Vibrations-Schweißeinrichtungen werden mehrere nebeneinander aufgestellt und gleichzeitig unter gleichen Druckverhältnissen mit gleicher Amplitude und gleicher Frequenz zum Schwingen gebracht. Die Amplituden und Frequenzen werden dabei so gesteuert, daß die Amplituden im Bereich von 0,5 mm bis 2,5 mm, vorzugsweise von 1 mm bis 2 mm, und die Frequenzen im Bereich von 60 bis 300 Hz, vorzugsweise von 150 bis 180 Hz liegen.

Da mit einer der erfindungsgemäßen Vibrations-Schweißeinrichtung je nach Abstand der Kreuzungsbereiche und der Breite der Stäbe 100 bis 500 Kreuzungsbereiche verschweißt werden können, was vorher nicht denkbar war, ist es gemäß der vorliegenden Erfindung möglich geworden, großflächige Geogitter mit beliebigen Breiten, vorzugsweise in Breiten von 3 bis 6 m herzustellen, indem man eine entsprechende Anzahl der erfindungsgemäßen Vibrations-Schweißeinheiten nebeneinander aufstellt.

Die Zuführung der in Längsrichtung, d.h. in Maschinenrichtung, zugeführten Stäbe, nachfolgend Längsstäbe genannt, erfolgt vorzugsweise parallel in gleichem Abstand zueinander. Das Verlegen der quer zur Längsrichtung geführten Stäbe, nachfolgend Querstäbe genannt, erfolgt vorzugsweise im rechten Winkel zur Längsrichtung durch Ablegen auf den Längsstäben, wobei die Längs- und Querstäbe vorzugsweise quadratische oder weniger oder stark langgezogene rechteckige Gitterzwischenräume bilden. Selbstverständlich können die Querstäbe aber auch die parallel verlaufenden Längsstäbe in einem Winkel von 45° bis 90° kreuzen.

Die Abstände zwischen den Längsstäben einerseits und den Querstäben andererseits können beliebig gewählt werden, vorzugsweise liegen sie im Bereich von 10mm bis 100 mm, insbesondere im Bereich von 20 mm bis 80 mm, gemessen jeweils von Seitenrand zu Seitenrand der Stäbe.

Bei der erfindungsgemäßen Herstellung der großflächigen Geogitter verfährt man so, daß man so viele Kunststoffstäbe in Maschinenrichtung und entsprechend viele Kunststoffstäbe in Querrichtung dazu anordnet, daß man eine Gesamtbreite des Geogitters von 3 m bis 6 m, vorzugsweise von 5 m, und eine Gesamtlänge von 25 m bis 500 m, vorzugsweise von 50 m bis 100 m, erhält.

Die erfindungsgemäß eingesetzten Kunststoffstäbe weisen entweder einen quadratischen Querschnitt, vorzugsweise mit Seitenlängen von 2,0 mm bis 6,0 mm, insbesondere von 2,5 mm bis 4,5 mm, oder einen rechteckigen Querschnitt, vorzugsweise mit einer Breite von 5 mm bis 40 mm, insbesondere von 10 mm, 12 mm oder 16 mm, und einer Dicke von vorzugsweise 0,4 mm bis 2,5 mm, insbesondere von 1,0 mm bis 1,5 mm, auf.

Gemäß einer besonderen Ausführungsform setzt man als Längsstäbe solche Kunststoffstäbe ein, die breiter und/oder dicker sind als die Querstäbe.

Zu den bevorzugt eingesetzten thermoplastischen Kunststoffen gehören Polyester (PES), z.B. Polyethylenterephthalat (PET), Polyolefine, z.B. Polyethylen hoher Dichte (PEHD) oder Polypropylen (PP), Polyamide (PA), z.B. PA 6 und PA 66, Aramid sowie Polyvinylalkohole (PVA).

Insbesondere werden als thermoplastische Kunststoffe Polyethylenterephthalat (PET) oder Polypropylen (PP) eingesetzt. Um eine möglichst hohe Zugfestigkeit zu gewährleisten, sollte das Reckverhältnis beim PP maximal 1:15, vorzugsweise 1:9 bis 1:13 betragen. Beim PET ist ein maximales Reckverhältnis von 1:10, vorzugsweise 1:6 bis 1:8, sinnvoll, womit Dehnungen bei Höchstzugkraft von 5% bis 20% erzielt werden können.

Die Festigkeit der Kunststoffstäbe liegt vorzugsweise zwischen 300 N/mm² und 800 N/mm² und sie können flexibel oder steif sein.

Da die Wechselwirkung zwischen Bewehrungsgitter und Boden auf der Aktivierung von Reibungskräften zwischen Boden und Gitter beruht, können die Gitterstäbe an ihrer Ober- und/oder Unterseite vorzugsweise mit einer die Reibung/den Kontakt zum Boden erhöhenden Profilierung/Prägung versehen sein.

Mögliche Prägungen sind z.B. Rautenstrukturen mit einer Prägetiefe von 0,05 mm bis 0,5 mm. Die Prägetiefe sollte jedoch zwischen 0,5% und 30% der Dicke der Kunststoffstäbe liegen. Beispielsweise beträgt die Prägetiefe 0,15 mm je Seite bei einer Dicke des Kunststoffstabes von 1,5 mm.

Weitere mögliche Prägungen sind beispielsweise
- Längsrillen
- Querrillen
- Wabenstrukturen
- Rautenstrukturen mit Spikes
- Noppen, Spikes, etc.
- oder Kombinationen aus den o.g. Prägungen.

Die Erfindung wird weiterhin anhand der nachfolgenden beispielhaften Angaben erläutert, ohne sie jedoch darauf zu beschränken.

Die hochzugfesten Kunststoffstäbe werden über einen Extruder horizontaler Bauart mit automatischem Schmelzefilter extrudiert.

Über mehrere Reckständer, Heißluftkanäle sowie Sprühkanäle mit Stabumlenkungen werden die Kunststoffstäbe hochzugfest verstreckt, wobei eine Molekülorientierung stattfindet.

Die extrudierten und verstreckten Kunststoffstäbe werden mittels Wickler auf Spulen, z.B. bis zu einer Länge von 15.000 lfm aufgewickelt.

Zur Weiterverarbeitung der hochzugfesten Kunststoffstäbe zu großflächigen Geogittern mit Breiten von vorzugsweise 3,0 m bis 6,0 m, insbesondere von 5,0 m werden die gefertigten Spulen auf Spulengattern vorgelegt. Die Aufnahmen für die Einzelspulen enthalten vorzugsweise eine Bremsvorrichtung, um ein kontrolliertes Abspulen der Spulen zu gewährleisten. Bei einer Arbeitsbreite von 5,0 m und einem angenommenen Abstand von Kunststoffstabmitte zu Kunststoffstabmitte von 30 mm bei einer Breite der Kunststoffstäbe von 10 mm müßten 167 Aufnahmen vorhanden sein.

Wie bereits erwähnt, können aber auch andere Abstände im Bereich von 10 mm bis 100 mm gewählt werden, da beispielsweise für Drainmatten die Abstände vorzugsweise auf bis zu ca. 10 mm und darunter verringert werden, um druckstabile Abflußverhältnisse der Drainstruktur zu gewährleisten.

Alle in Längsrichtung zu verlegenden Kunststoffstäbe werden, wie ebenfalls bereits erwähnt, vorzugsweise parallel zueinander geführt.

Die in Längsrichtung (Maschinenrichtung) verlaufenden Kunststoffstäbe (Längsstäbe) werden über eine Abzugsgruppe abgezogen. In der Zuggruppe befindet sich ein Querschneidsystem zum Trennen der Längsstäbe beim Rollenwechsel und eine Verbindungseinrichtung zum automatischen Verbinden der neuen Längsstäbe mit dem Rest der alten Längsstäbe. Vorzugsweise werden zum Verbinden Ultraschallschweißeinrichtungen bzw. Vibrations-schweißeinrichtungen verwendet.

Über pneumatisch betätigte Bremsen wird ein kontrolliertes Einziehen der einzelnen Längsstäbe in die Abzugsgruppe gewährleistet. Die Abzugsgruppe ist so konstruiert, daß während des nachfolgenden Schweißvorganges eine kontinuierliche Spannung der einzelnen Längsstäbe gewährleistet ist.

Die quer zu den Längsstäben verlaufenden Kunststoffstäbe (Querstäbe) werden über einen Verlegekopf abgelegt. Eine gleichzeitige Verlegung von vorzugsweise bis zu 50 Querstäben ist möglich. Der Verlegekopf ist so konstruiert, daß ein Verlegen der bis zu 50 Querstäbe in vorzugsweise beide Richtungen beim Überfahren der Längsstäbe möglich ist.

Einzelne Bremsen gewährleisten während des Verlegens eine gleichbleibende Spannung in den einzelnen Querstäben.

Die verlegten Querstäbe werden über einen Raupenvorzug bzw. Abzug der eigentlichen Schweißeinheit für die Gitterkreuzungsbereiche zugeführt. Der Raupenvorzug besteht aus je einer unteren ortsfesten Duplexkette und zwei horizontal verfahrbaren Duplexketten. Um eine ausreichende Presskraft zwischen den beiden Duplexketten zum Spannen der Querstäbe zu gewährleisten, befindet sich unter der unteren Kettenführung ein Druckschlauch, der die untere Raupenkette gegen die obere Raupenkette drückt.

Mitlaufende Schneideeinrichtungen durchtrennen die verlegten, gespannten Querstäbe kurz vor dem Transport in die Schweißeinrichtung.

Die Vibrations-Schweißvorrichtung besteht beispielsweise aus 10 nebeneinander angeordneten Vibrations-Schwingeinrichtungen mit jeweils einer großen Schwingplatte mit integriertem Schwingrahmen, Antriebsgeneratoren, Amplitudenregelplatine und Schwingbegrenzungseinrichtung. Die Abmessungen der einzelnen Vibrations-Schwingeinrichtungen betragen beispielsweise 475 mm x 720 mm, so daß alle 10 Vibrations-Schwingeinrichtungen zusammen ein Verschweißen von beispielsweise ca. 4000 bis ca. 8000 Einzelschweißungen in einem Arbeitsgang ermöglichen. Der Schweißvorgang erfolgt vorzugsweise in einem Bereich zwischen 60 und 300 Hz, insbesondere zwischen 150 und 180 Hz, und bei Amplituden von bis zu 2 mm.

Die 10 Vibrations-Schwingeinrichtungen besitzen jeweils einen kompletten Maschinenrahmen. Die 10 entsprechenden Unterwerkzeuge befinden sich auf 10 Schweißtischen, welche über je 4 Hydraulikzylinder zum Schweißen angehoben werden. Zur Führung der Kunststoffstäbe werden im Bereich der Schweißwerkzeuge Separierkämme eingesetzt.

Nach dem Schweißvorgang kann das fertige großflächige Geogitter über eine Hauptabzugsgruppe einer Kaschierstation, beispielsweise für Vliesstoffe, Gewebe, Gewirke oder Folien zugeführt werden, um Verbundprodukte, z.B. aus Gitter und Vliesstoff, zur Verwendung als Kunststoff-Drainelement oder als Trenn- und Bewehrungselement in einem sich direkt an die Geogitter-Herstellung anschließenden Arbeitsgang herzustellen. Die ein-bzw. beidseitige Kaschierung kann mittels Heizkeil, Heißluft, Kleber, etc. durchgeführt werden. Nach der Kaschierung werden die Verbundprodukte der Schneid- und Wickeleinheit zugeführt.

Die erfindungsgemäßen mit Folien kaschierten Geogitter eignen sich hervorragend für Abdeckplanen für Frachtgüter und Lastkraftwagen, sowie für Behelfsdächer.

Die erfindungsgemäßen Geogitter selbst können neben ihren eingangs genannten Hauptanwendungsgebieten auch zur Erstellung von Zäunen, beispielsweise als Wildschutzzäune, oder zur Erstellung von Zäunen in der Tierhaltung oder zur Erstellung von Zäunen als Baustellensicherung, als Lawinenschutz oder als Steinschlagschutz dienen.

## Patentansprüche

1. Verfahren zur kontinuierlichen Herstellung von großflächigen Geogittern aus sich kreuzenden thermoplastischen Kunststoffstäben, die in den Kreuzungsbereichen durch Verschweißen miteinander verbunden sind, **dadurch gekennzeichnet,** daß man einschichtige homogene molekülorientierte hochzugfeste Kunststoffstäbe einsetzt und eine Vielzahl von hintereinander und nebeneinander angeordneten Kreuzungsbereichen im Taktverfahren gleichzeitig unter Anwendung der Vibrations-Schweißtechnik verschweißt.

2. Verfahren nach Anspruch 1, **dadurch gekennzeichnet,** daß man 500 bis 8000 Kreuzungsbereiche gleichzeitig verschweißt.

3. Verfahren nach Anspruch 1 bis 2, **dadurch gekennzeichnet,** daß man mehrere Vibrations-Schweißeinrichtungen gleichzeitig unter gleichem Druck mit gleicher Amplitude und gleicher Frequenz schwingen läßt, wobei die Amplituden im Bereich von 0,5 mm bis 2,5 mm, vorzugsweise von 1 mm bis 2 mm, und die Frequenzen im Bereich von 60 bis 300 Hz, vorzugsweise von 150 bis 180 Hz, liegen.

4. Verfahren nach einem oder mehreren der vorstehenden Ansprüche 1 bis 3, **dadurch gekennzeichnet,** daß man die sich kreuzenden Kunststoffstäbe so führt, daß die quer zur Maschinenrichtung verlaufenden Kunststoffstäbe (Querstäbe) die in Maschinenrichtung parallel zueinander laufenden Kunststoffstäbe (Längsstäbe) in einem Winkel von 45° bis 90° kreuzen.

5. Verfahren nach einem oder mehreren der Ansprüche 1 bis 4, **dadurch gekennzeichnet,** daß man die Kunststoffstäbe so anordnet, daß sie zueinander, d.h. von Seitenrand zu Seitenrand, einen Abstand voneinander von 10 bis 100 mm, vorzugsweise von 20 mm bis 80 mm, aufweisen.

6. Verfahren nach einem oder mehreren der vorstehenden Ansprüche 1 bis 5, **dadurch gekennzeichnet,** daß man so viele Kunststoffstäbe in Maschinenrichtung und entsprechend viele Kunststoffstäbe in Querrichtung dazu anordnet, daß man eine Gesamtbreite des Geogitters von 3 m bis 6 m, vorzugsweise von 5 m, und eine Gesamtlänge von 25 m bis 500 m, vorzugsweise von 50 m bis 100 m, erhält.

7. Verfahren nach einem oder mehreren der vorstehenden Ansprüche 1 bis 6, **dadurch gekennzeichnet,** daß man Kunststoffstäbe einsetzt, die eine Zugfestigkeit von 300 bis 800 N/mm² aufweisen.

8. Verfahren nach einem oder mehreren der vorstehenden Ansprüche 1 bis 7, **dadurch gekennzeichnet,** daß man Kunststoffstäbe mit quadratischem Querschnitt, vorzugsweise mit einer Seitenlänge von 2 mm bis 6 mm, insbesondere von 2,5 mm bis 4,5 mm, oder mit rechteckigem Querschnitt einsetzt, die vorzugsweise eine Breite von 5 mm bis 40 mm, insbesondere von 10 mm, 12 mm oder 16 mm, und eine Dicke von vorzugsweise 0,4 mm bis 2,5 mm, insbesondere von 1,0 mm bis 1,5 mm, aufweisen.

9. Verfahren nach einem oder mehreren der vorstehenden Ansprüche 1 bis 8, **dadurch gekennzeichnet,** daß man Kunststoffstäbe einsetzt, deren Ober- und/oder Unterseite eine Prägung aufweisen.

10. Verfahren nach Anspruch 9, **dadurch gekennzeichnet,** daß man Kunststoffstäbe einsetzt, die eine Prägetiefe auf Ober- und/oder Unterseite von 0,5 bis 30%, bezogen auf die Dicke der Kunststoffstäbe, aufweisen, wobei die Prägung vorzugsweise eine Rautenstruktur darstellt.

11. Verfahren nach einem oder mehreren der vorstehenden Ansprüche 1 bis 10, **dadurch gekennzeichnet,** daß man als Längsstäbe solche Kunststoffstäbe einsetzt, die breiter und/oder dicker sind als die in Querrichtung eingesetzten Kunststoffstäbe (Querstäbe).

12. Verfahren nach einem oder mehreren der vorstehenden Ansprüche 1 bis 11, **dadurch gekennzeichnet,** daß man Kunststoffstäbe einsetzt, die aus Polyethylenterephthalat (PET) oder Polypropylen (PP) bestehen.

13. Verfahren nach einem oder mehreren der vorstehenden Ansprüche 1 bis 12, **dadurch gekennzeichnet,** daß man auf das fertige großflächige Geogitter zusätzlich auf einer oder beiden Seiten mittels Heizkeil, Heizluft oder Klebstoff Vliesstoffe, Gewebe, Gewirke oder Folien aufkaschiert.

14. Großflächige hochzugfeste Geogitter aus sich kreuzenden thermoplastischen einschichtigen homogenen molekülorientierten hochzugfesten Kunststoffstäben, die in den Kreuzungspunkten mittels Vibrations-Schweißtechnik verschweißt sind.

15. Großflächige hochzugfeste Geogitter gemäß Anspruch 14, **dadurch gekennzeichnet,** daß sie gemäß einem oder mehreren der vorstehenden Ansprüche 1 bis 13 hergestellt wurden.

16. Vibrations-Schweißvorrichtung zur Erstellung von großflächigen hochzufesten Geogittern aus sich kreuzenden hochzugfesten Kunststoffstäben, **dadurch gekennzeichnet,** daß die Vorrichtung mindestens eine Vibrations-Schwingeinrichtung aufweist, mit der mindestens 100 Kreuzungsbereiche, vorzugsweise bis zu 500 Kreuzungsbereiche, gleichzeitig verschweißt werden können.

17. Vibrations-Schweißvorrichtung zur Herstellung von großflächigen hochzugfesten Geogittern aus sich kreuzenden hochzugfesten Kunststoffstäben nach Anspruch 16, **dadurch gekennzeichnet,** daß 10 Vibrations-Schwingeinrichtungen nebeneinander angeordnet sind, die mittels entsprechender Steuerungsgeräte gleichzeitig mit gleicher Amplitude und gleicher Frequenz unter Druck zum Schwingen gebracht werden, um gleichzeitig unter Druck bis zu 8000 Kreuzungsbereiche zu verschweißen.

18. Verwendung großflächiger hochzugfester Geogitter gemäß einem oder mehreren der vorstehenden Ansprüche als Drain- oder Bewehrungsgitter bei der Erstellung von Erdbauwerken.

19. Verwendung großflächiger Geogitter gemäß einem oder mehreren der vorstehenden Ansprüche als Zaunelemente.

20. Verwendung von großflächigen mit Folien einseitig oder zweiseitig kaschierten Geogittern als Abdeckplanen.

## Claims

1. Method for the continuous production of geogrids which have a large surface area and comprise thermoplastic bars which cross one another and are joined together by welding at the areas where they cross one another, characterized in that single-layer, homogeneous, molecular-oriented plastic bars with a high tensile strength are used and a multiplicity of crossing areas arranged next to and behind one another are intermittently welded simultaneously using the vibration-welding technique.

2. Method according to Claim 1, characterized in that from 500 to 8000 crossing areas are welded simultaneously.

3. Method according to Claim 1 or 2, characterized in that a plurality of vibration-welding devices are made to vibrate simultaneously at equal pressures and amplitudes and frequencies, the amplitudes lying in the range from 0.5 mm to 2.5 mm, preferably from 1 mm to 2 mm, and the frequencies lying in the range from 60 to 300 Hz, preferably from 150 to 180 Hz.

4. Method according to one or more of the preceding Claims 1 to 3, characterized in that the plastic bars which cross one another are positioned in such a way that the plastic bars which run transversely to the direction of the machine (transverse bars) cross the plastic bars which run parallel to one another in the direction of the machine (longitudinal bars) at an angle of from 45° to 90°.

5. Method according to one or more of Claims 1 to 4, characterized in that the plastic bars are arranged in such a way that they are at a distance of from 10 to 100 mm, preferably from 20 mm to 80 mm, from one another, i.e. from side edge to side edge.

6. Method according to one or more of the preceding Claims 1 to 5, characterized in that the number of plastic bars in the direction of the machine and the corresponding number of plastic bars in the direction transverse thereto are such that the overall width of the geogrid is from 3 m to 6 m, preferably is 5 m, and its overall length is from 25 m to 500 m, preferably from 50 m to 100 m.

7. Method according to one or more of the preceding Claims 1 to 6, characterized in that the plastic bars used have a tensile strength of from 300 to 800 N/mm².

8. Method according to one or more of the preceding Claims 1 to 7, characterized in that plastic bars which are square in cross section, preferably with a side length of from 2 mm to 6 mm, in particular from 2.5 mm to 4.5 mm, or which are rectangular in cross section are used, preferably having a width of from 5 mm to 40 mm, in particular of 10 mm, 12 mm or 16 mm, and a thickness of preferably from 0.4 mm to 2.5 mm, in particular from 1.0 mm to 1.5 mm.

9. Method according to one or more of the preceding Claims 1 to 8, characterized in that the plastic bars used have been stamped on their top and/or bottom sides.

10. Method according to Claim 9, characterized in that the plastic bars used have a stamped depth on their top and/or bottom sides of from 0.5 to 30%, based on the thickness of the plastic bars, the stamping preferably forming a diamond-shaped structure.

11. Method according to one or more of the preceding Claims 1 to 10, characterized in that the longitudinal bars used are plastic bars which are wider and/or thicker than the plastic bars used in the transverse direction (transverse bars).

12. Method according to one or more of the preceding Claims 1 to 11, characterized in that the plastic bars used consist of polyethylene terephthalate (PET) or polypropylene (PP).

13. Method according to one or more of the preceding Claims 1 to 12, characterized in that nonwoven, woven or knitted fabrics or sheets are additionally laminated onto one or both sides of the finished large surface area geogrid by means of a heated tool, hot air or adhesive.

14. Large surface area geogrids which have a high tensile strength and comprise thermoplastic, single-layer, homogeneous, molecular-oriented bars which cross one another, have a high tensile strength and are welded at the points where they cross one another by means of the vibration-welding technique.

15. Large surface area geogrids which have a high tensile strength according to Claim 14, characterized in that they have been produced as described in one or more of the preceding Claims 1 to 13.

16. Vibration-welding apparatus for producing large surface area geogrids which have a high tensile strength and comprise plastic bars which cross one another and have a high tensile strength, characterized in that the apparatus has at least one vibration device which can be used to weld at least 100 crossing areas, preferably up to 500 crossing areas, simultaneously.

17. Vibration-welding apparatus for producing large surface area geogrids which have a high tensile strength and comprise plastic bars which cross one another and have a high tensile strength, characterized in that 10 vibration devices are arranged next to one another and are made to vibrate simultaneously at equal amplitudes and frequencies under pressure, by means of suitable control units, in order for up to 8000 crossing areas to be welded simultaneously under pressure.

18. Use of large surface area geogrids with a high tensile strength as described in one or more of the preceding claims as drain or reinforcement grids for constructing earthworks.

19. Use of large surface area geogrids as described in one or more of the preceding claims as fencing elements.

20. Use of large surface area geogrids which are laminated to sheets on one or both sides as tarpaulins.

## Revendications

1. Procédé de fabrication en continu de géogrilles de grande surface formées de tiges de matière thermoplastique croisées, reliées par des soudures à leurs points d'intersection,
caractérisé en ce qu'
on utilise des tiges en matière plastique très résistantes à orientation moléculaire homogène monocouche, et
on soude un grand nombre de zones de croisement successives et juxtaposées, par un procédé en cadence, simultanément, en appliquant la technique de soudage par vibrations.

2. Procédé selon la revendication 1,
caractérisé en ce qu'
on soude simultanément entre 500 et 8000 zones de croisement.

3. Procédé selon l'une quelconque des revendications 1 et 2,
caractérisé en ce qu'
on fait osciller plusieurs installations de soudage par vibrations, simultanément, à la même pression, à la même amplitude et à la même fréquence,
les amplitudes étant situées dans une plage de l'ordre de 0,5 mm à 2,5 mm et de préférence de 1 mm à 2 mm, et
les fréquences étant situées dans une plage comprise entre 60 et 300 Hz et de préférence entre 150 et 180 Hz.

4. Procédé selon l'une ou plusieurs des revendications précédentes 1 à 3,
caractérisé en ce qu'
on guide les tiges de matière plastique croisées pour que ces tiges (tiges transversales) dirigées transversalement par rapport à la direction de la machine, croisent les tiges de matière plastique (tiges longitudinales) dirigées parallèlement à la direction de la machine, suivant un angle de 45° à 90°.

5. Procédé selon l'une ou plusieurs des revendications 1 à 4,
caractérisé en ce que
les tiges de matière plastique sont disposées pour avoir un intervalle, pris d'un bord latéral à l'autre, compris entre 10 et 100 mm et de préférence entre 20 mm et 80 mm.

6. Procédé selon l'une ou plusieurs des revendications 1 à 5,
caractérisé en ce qu'
on dispose dans la direction longitudinale de la machine et dans la direction transversale, un certain nombre de tiges de matière plastique pour que la largeur totale de la grille géophysique corresponde à 3 m jusqu'à 6 m et de préférence 5 m, et que la longueur totale soit de 25 à 500 m et de préférence de 50 m à 100 m.

7. Procédé selon l'une ou plusieurs des revendications précédentes 1 à 6,
caractérisé en ce qu'
on utilise des tiges de matière plastique ayant une résistance à la traction comprise entre 300 et 800 N/mm².

8. Procédé selon l'une ou plusieurs des revendications 1 à 7,
caractérisé en ce qu'
on utilise des tiges de matière plastique ayant une section carrée, de préférence une longueur de côté de 2 mm à 6 mm et notamment de 2,5 mm à 4,5 mm, ou à section rectangulaire ayant de préférence une largeur de 5 mm à 40 mm et notamment de 10 mm, 12 mm ou 16 mm, et une épaisseur de préférence de 0,4 mm jusqu'à 2,5 mm et notamment de 1,0 mm jusqu'à 1,5 mm.

9. Procédé selon l'une ou plusieurs des revendications 1 à 8,
caractérisé en ce qu'
on utilise des tiges de matière plastique dont le côté supérieur et/ou le côté inférieur comportent une impression.

10. Procédé selon la revendication 9,
caractérisé en ce qu'
on utilise des tiges de matière plastique ayant une profondeur d'impression, sur la face supérieure et/ou la face inférieure, allant de 0,5 jusqu'à 30 %, rapportée à l'épaisseur des tiges de matière plastique, l'impression ayant de préférence une structure de losange.

11. Procédé selon l'une ou plusieurs des revendications précédentes 1 à 10,
caractérisé en ce que
comme tiges longitudinales on utilise des tiges de matière plastique plus larges et/ou plus épaisses que les tiges de matière plastique disposées dans la direction transversale (tiges transversales).

12. Procédé selon l'une ou plusieurs des revendications précédentes 1 à 11,
caractérisé en ce qu'
on utilise des tiges de matière plastique en polyéthylènetérephtalate (PET) ou en polypropylène (PP).

13. Procédé selon l'une ou plusieurs des revendications précédentes 1 à 12,
caractérisé en ce que
sur la grille géophysique de grande surface, terminée, on maroufle en outre, sur l'une ou les deux faces, à l'aide de coins de chauffage, d'air chaud ou de matière adhésive, des matières non tissées, des tissus, des tricots ou des fils.

14. Grille géophysique très résistante, de grande surface,
formée de tiges de matière plastique très résistantes, à orientation moléculaire homogène, à monocouche, thermoplastiques, croisées, qui sont soudées par soudage aux vibrations au niveau de leurs points de croisement.

15. Grilles géophysiques de grande résistance à la traction, de grande surface, selon la revendication 14,
caractérisée en ce qu'
elles sont fabriquées par le procédé selon l'une ou plusieurs des revendications précédentes 1 à 13.

16. Dispositif de soudage par vibrations pour la réalisation de grilles géophysiques très résistantes, de grande surface, formées de tiges en matière plastique très résistantes, croisées,
caractérisé en ce que
le dispositif comporte au moins une installation de soudage par vibrations, permettant de souder au moins 100 zones de croisement et de préférence jusqu'à 500 zones de croisement par soudage simultané.

17. Dispositif de soudage par vibrations pour la fabrication de grilles géophysiques très résistantes, de grande surface, formées de tiges en matière plastique très résistantes, croisées, selon la revendication 16,
caractérisé en ce qu'
on a 10 installations de soudage par vibrations, juxtaposées, qui sont mises simultanément en vibration à la même amplitude et la même fréquence, sous pression, par des appareils de commande correspondants, pour souder simultanément sous pression jusqu'à 8000 zones d'intersection.

18. Application de grilles géophysiques très résistantes à la traction, de grande surface, selon l'une ou plusieurs des revendications précédentes, comme grilles de drainage ou d'armature pour la réalisation de constructions terrestres.

19. Application de grilles géophysiques de grande surface, selon l'une ou plusieurs des revendications précédentes, comme éléments de clôtures.

20. Application de grilles géophysiques de grande surface marouflées sur une face ou sur les deux faces avec un film, comme bâches.
